(19) Europäisches Patentamt / European Patent Office / Office européen des brevets

(11) EP 1 572 792 B1

(12) **EUROPEAN PATENT SPECIFICATION**

(45) Date of publication and mention of the grant of the patent: **21.05.2008 Bulletin 2008/21**

(21) Application number: **03814120.6**

(22) Date of filing: **16.12.2003**

(51) Int Cl.:
***C08K 3/00*** *(2006.01)* ***C08L 67/00*** *(2006.01)*
***C08L 71/00*** *(2006.01)* ***C08L 79/08*** *(2006.01)*

(86) International application number: **PCT/US2003/040242**

(87) International publication number: **WO 2004/058866 (15.07.2004 Gazette 2004/29)**

(54) **LOW COEFFICIENT OF FRICTION THERMOPLASTIC COMPOSITION CONTAINING FILLERS**

FÜLLSTOFF ENTHALTENDE THERMOPLASTISCHE ZUSAMMENSETZUNG MIT NIEDRIGEM REIBUNGSKOFFIZIENTEN

COMPOSITION THERMOPLASTIQUE A FAIBLE COEFFICIENT DE FROTTEMENT CONTENANT DES CHARGES

(84) Designated Contracting States:
**AT BE BG CH CY CZ DE DK EE ES FI FR GB GR HU IE IT LI LU MC NL PT RO SE SI SK TR**

(30) Priority: **18.12.2002 US 434260 P**

(43) Date of publication of application: **14.09.2005 Bulletin 2005/37**

(73) Proprietor: **E.I. DU PONT DE NEMOURS AND COMPANY**
**Wilmington, DE 19898 (US)**

(72) Inventor: **BLOOM, Joy, Sawyer**
**Wilmington, DE 19810 (US)**

(74) Representative: **Morf, Jan Stefan et al**
**Abitz & Partner**
**Patentanwälte**
**Postfach 86 01 09**
**81628 München (DE)**

(56) References cited:
**EP-A- 0 384 711**
**US-A- 5 576 358**
**US-A- 5 731 373**
**US-A- 5 789 523**

- **DATABASE WPI Section Ch, Week 199202 Derwent Publications Ltd., London, GB; Class A28, AN 1992-011379 XP002277253 -& JP 03 259950 A (UNITIKA LTD), 20 November 1991 (1991-11-20)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 572 792 B1

## Description

The present invention relates to a thermoplastic composition and an article made therefrom having low friction/ sliding properties. More particularly, the present invention relates to a thermoplastic composition containing at least graphite, mica and carbon fiber for low coefficient of friction materials and an article made therefrom.

## BACKGROUND OF THE INVENTION

The following disclosures may be relevant to various aspects of the present invention and may be briefly summarized as follows:

U.S. Patent No. 5,969,083 to Long et al. discloses a select class of liquid crystalline polyesters and molding compositions comprising the polyesters and glass fiber. The liquid crystalline polyesters consist essentially of (1) diacid residues consisting essentially of (i) cyclohexanedicarboxylic acid residues and (ii) other diacid residues, 2,6-naphthalene-dicarboxylic acid residues, or a mixture thereof; (2) diol residues consisting essentially of hydroquinone residues, 4,4'-biphenol residues or a mixture thereof; and, optionally (3) p-hydroxybenzoic acid residues. In the above definition, the moles of diol residues are equal to the moles of diacid residues and the total of the (1), (2) and (3) mole percentages is equal to 100. The liquid crystalline polyesters have melting points determined by differential scanning calorimetry equal to or less than 360°C.

U.S. Patent No. 5, 844,036 to Hughes discloses an injection moldable, highly filled polymer composites, which exhibit high dimensional stability at temperatures above the glass transition temperature of the matrix polymer. The heat distortion temperature of the composites approaches that of the crystal melting temperature of the matrix polymer. The composite includes a polyaryletherketone matrix and at least two types of fillers each providing unique properties. The first filler is a reinforcing fiber filler, which provides high strength and stiffness. The second filler is a non-thermoplastic immobilizing filler to immobilize the amorphous portion of the partially crystalline polyaryletherketone polymer and provide resistance to high temperature distortion. Notwithstanding its improved mechanical and heat resistant properties, the composite remains injection moldable and thus capable of low cost manufacturing.

U.S. Patent No. 5,830,940 to Nakamura et al. discloses a shaped article of a liquid crystalline polymer containing (A) 100 parts by weight of a liquid crystalline polyester and/or liquid crystal polyesteramide capable of forming an anisotropic melt and (B) 0.01 to 2 parts of an olefinic polymer and having a retention rate of a weld strength of 15% to 100%, which has excellent heat stability, mechanical properties, dimensional stability and mold releasability and is suitable for various application uses such as electrical and electronic related devices, accurate machine related devices, office related devices, automobile related parts.

U.S. Patent No. 5,789,523 to George et al. discloses polyimide compositions that can be substantially improved by incorporating into the composition an inorganic, low hardness, thermally stable, sheet silicate, such as muscovite mica, talc and kaolinite, which results in improved wear resistance and reduced coefficient of friction.

U.S. Patent No. 5,700,863 to Bloom discloses polyimide polymeric blends which are environmentally friendly during compounding and give improved coefficient of friction in shaped articles prepared therefrom are provided by blending polyimides which are at least 90% imidized and substantially solvent free and have a mean particle size of about 30 $\mu$m or less with at least one melt processible thermoplastic liquid crystalline polymer or polyamide and a lubricant.

U.S. Patent No. 4,115,283 to Needham discloses an antifriction composition useful for bearings comprising poly (arylene sulfide), a solid lubricating component, a reinforcing material, and a filler in which the commonly employed antimony trioxide filler is replaced in whole or in part by a replacement filler of calcium carbonate, titanium dioxide, barium sulfate, hydrated aluminum silicates, red iron oxide, carbon black or diatomaceous earth, compatible with the other components.

Thermoplastics are used in a variety of applications including molding resins. Thermoplastics are used in a variety of applications because they have desirable (combination of) properties that other polymers have been unable to match. There are many applications in which low coefficient of friction (COF) is desired such as in bushings and bearings where the low coefficient of friction results in lower heat generation and improved lifetime for the application.

It is desirable to improve the coefficient of friction of thermoplastic material to less than or equal to 0.2.

## SUMMARY OF THE INVENTION

Briefly stated, and in accordance with one aspect of the present invention, there is provided a composition comprising a thermoplastic material containing fillers wherein said fillers comprise: (A) 1-20% by weight of graphite; (B) 4-30% by weight of a carbon fiber; and (C) 1-20% by weight of mica, and said thermoplastic material comprises 45-92 weight % said composition having a coefficient of friction of less than or equal to 0.20.

Pursuant to another aspect of the present invention, there is provided an article made from a composition comprising a thermoplastic material containing fillers wherein said fillers comprise: (A) 1-20% by weight of graphite; (B) 4-30% by weight of a carbon fiber; and (C) 1-20% by weight of mica, said composition having a coefficient of friction of less than or equal to 0.20.

## DETAILED DESCRIPTION OF THE INVENTION

Definitions:

The following definitions are provided as reference in accordance with how they are used in the context of this specification and the accompanying claims.

1. **PV** = pressure x velocity.
2. **Pareto Chart** is a bar graph that shows information in order of magnitude. The Pareto Chart is used to identify those factors that have the greatest cumulative effect on the system.
3. For purposes of this application the following legend is provided showing the capital letter(s) that coincides with the description of the materials used in the Examples or Pareto Chart herein:

| | |
|---|---|
| CF | Carbon Fiber; Amoco® VMX26 manufactured by Amoco (milled carbon fiber) |
| G | Graphite; 4767 synthetic graphite (manufactured by Asbury Graphite Mills, Inc.) |
| M | Mica; Alsibronz® 10 manufactured by Engelhard Corp. |
| PP | Particulate Polyimide; Vespel® SP-1 manufactured by DuPont. |

A wide variety of polyimides are suitable for use according to the invention, including those described in U.S. Patent No. 3,179,614, the teachings of which are incorporated herein by reference. The polyimides described therein are prepared from at least one diamine and at least one anhydride. Preferred diamines, which can be used, include m-phenylene diamine (MPD), p-phenylene diamine (PPD), oxydianiline (ODA), methylene dianiline (MDA), and toluene diamine (TDA). Preferred anhydrides, which can be used to include benzophenone tetracarboxylic dianhydride (BTDA), biphenyl dianhydride (BPDA), trimellitic anhydride (TMA), pyromellitic dianhydride (PMDA), maleic anhydride (MA), and nadic anhydride (NA).

Preferred polyimides include those prepared from the following combinations of anhydride and diamine: BTDA-MPD, MA-MDA, BTDA-TDA-MPD, BTDA-MDA-NA, TMA-MPD & TMA-ODA, BPDA-ODA, BPDA-MPD, BPDA-PPD, BTDA-4,4'-diaminobenzophenone, and BTDA-bis(p-Phenoxy)-p,p'biphenyl. An especially satisfactory polyimide useful in the present invention is that prepared from pyromellitic dianhydride and 4,4'-oxydianiline (PMDA-ODA).

High performance shaped articles are formed from thermoplastics of this invention by a suitable thermoplastic molding operation including but not limited to injection or compression molding. Forming conditions must be selected to prevent polymer degradation and the formation of a well-consolidated structure.

The thermoplastics for use in the present invention include polypropylene, polyethylene, chlorinated polyethylene, polyethylene terephthalate (PET), polyamides, polysulfones, polyetherimides, polyether sulfones, polyphenylene sulfone, polyphenylene sulfide, polyether ketones, polyether ether ketones (PEEK), polyacetal, polycarbonate, ethylene-tetrafluoroethylene copolymers, aromatic polyesters, grafted polyphenylene ether resin, liquid crystal polymers and mixtures thereof.

Articles made from the composition of the present invention are another embodiment of the present invention. Typical articles include, but are not limited to, bearings, gears, bushings and brush washers.

The present invention is further illustrated by the following Examples in which parts and percentages are by weight unless otherwise indicated. In the Examples wear specimens were prepared by machining test blocks of the composition described. A 6.35mm (0.25") wide contact surface of a wear/friction test block was machined to such a curvature that it conformed to the outer circumference of a 35mm (1.38") diameter x 9.74mm (0.34") wide metal mating ring. The blocks were oven dried and maintained over desiccant until tested.

Wear tests were performed using a Falex No.1 Ring and Block Wear and Friction Tester. The equipment is described in ASTM Test Method D2714. After weighing, the dry block was mounted against the rotating metal ring and loaded against it with the selected test pressure. Rotational velocity of the ring was set at the desired speed. No lubricant was used between the mating surfaces. The rings were SAE 4620 steel, Rc 58-63, 6-12 RMS. A new ring was used for each test. Test time was 24 hours, except when friction and wear were high, in which case the test was terminated early. The friction force was recorded continuously. At the end of the test time, the block was dismounted, weighed and the wear calculated by the following calculation for wear volume:

Wear Factor Calculation

$$\text{Wear Factor (cc/hr)} = \text{weight loss (grams)}/(\text{material density (g/cc)} \times \text{test duration (hr)} \times \text{load (kg)} \times \text{velocity (m/s)}).$$

The wear factor is determined by the above calculation. Wear Factor allows pressure and velocity to be taken into account when comparing resins. A low number is desired for Wear Factor and a low number or narrow range is desired for the Coefficient of Friction. Coefficient of Friction is preferably <0.20. When a sample is considered to have failed the wear test, melting of the sample occurs such that no usable weight loss can be calculated and the COF is suspect because the wear specimen is no longer of a known dimension.

## EXAMPLES

The Tm (i.e. melting temperature) and the onset of melting temperature were determined using a 25°C/minute heating rate with either a DuPont Model 1090 Dual Sample Differential Scanning Calorimeter or a TA Instruments Model 2010 Differential Scanning Calorimeter by ASTM D3418. The melting point is taken as the peak of the melting endotherm on the second heat when measured by Differential Scanning Calorimetry.

**Table 1: Onset of Melting and Tm**

| LCP | Onset (°C.) | Tm (°C.) |
|---|---|---|
| Zenite® 4000 (manufactured by DuPont) | 250 | 323 |
| Zenite® 6000 (manufactured by DuPont) | 286 | 337 |
| Zenite® 7000 (manufactured by DuPont) | 285 | 348 |
| Zenite® 9100 (manufactured by DuPont) | 303 | 318 |
| Sumitomo® E5000 (manufactured by Sumitomo) | 332 | 399 |
| Xydar® RC-210B (manufactured by Solvay Advanced Polymers, LLC) | 351 | 407 |
| Zenite® 9900HT (manufactured by DuPont) | 364 | 434 |

In addition to the LCP materials in Table 1, Cypek® DS-E (manufactured by Cytec Industries, Inc.) was tested in order to provide a comparison of a non-LCP matrix material to an LCP matrix material, in the present invention. Cypek® DS-E is a polyether ketone ketone (PEKK) and has an onset of melting temperature of 280°C and a Tm of 307°C.

### Example 1:

Sixty-five (65) weight percent of a liquid crystalline polyester ( Zenite® 7000) was blended with 10 weight percent of 4767 synthetic graphite, 10 weight percent of Amoco VMX26 milled carbon fiber, 5 weight percent of mica (Alsibronz®10) and 10 weight percent of a particulate polyimide resin (Vespel® SP-1). The blending was accomplished using a 30-mm twin screw extruder with barrels set to 320°C and the die at 335°C having vent ports in zones 4 and 8. Quenching was accomplished using a water spray. The strand was cut into pellets using a standard rotating blade cutter. The pellets were molded into standard 6.4mm thick ASTM (D638) tensile test bars using a 170g capacity, 145-ton

clamping pressure injection molding machine. The profile was as follows: Rear 335°C, Center 340°C, Front 340°C and Nozzle 345 °C. Boost 1.5 sec, Injection 5 sec, Hold 15 sec, Injection Pressure 5.5 MPa, Ram Speed fast, Screw Speed 115 rpm and Back Pressure 0.3MPa.

The samples were made into test specimens by machining. Wear testing was done at PV (pressure x velocity). The COF of the samples that did not melt during wear testing were taken and the results are indicated in Table 1. This sample included the fillers of carbon fiber, mica, graphite and particulate polyimide. This combination of fillers in the liquid crystalline polyester (LCP) provided the low COF (< or = 0.2) of the present invention, as shown in Table 1.

**Table 1**

| Sample No. | PV (MPa-m/s) | Wear Factor (cc-s/m-kg-hr) x $10^{-6}$ | Coefficient of Friction |
|---|---|---|---|
| 1 | 1.75 | 30.7 | 0.07 |
| 1 | 2.63 | 27.4 | 0.075 |
| 1 | 3.5 | Melt | Melt |

**Example 2:**

A statistically designed experiment was utilized to determine the relationship between the fillers used in Example 1 and the coefficient of friction (COF). The same method for sample preparations as used in Example 1 was used in Example 2 with the exception of various filler amounts being changed. A 32 run, four (4) variable screening design with four (4) midpoints and two levels of replication was used. Each filler component was set from 0 to 12 weight percent where total filler content did not exceed 48 weight %. The various compositions were measured for friction at a PV of 1.75 MPa-m/s. Values were obtained for the coefficient of friction even if the sample did not survive the entire 24 hours of the test. Table 2 documents the formulation and the coefficient of friction (COF) of the two wear tests performed on each sample.

**Table 2**

| Sample No. | PP | G | CF | M | COF Run 1 | COF Run 2 |
|---|---|---|---|---|---|---|
| 2 | 0 | 0 | 0 | 0 | 0.36 | 0.41 |
| 3 | 12 | 0 | 0 | 0 | 0.77 | 0.51 |
| 4 | 0 | 12 | 0 | 0 | 0.4 | 0.42 |
| 5 | 0 | 0 | 12 | 0 | 0.21 | 0.24 |
| 6 | 0 | 0 | 0 | 12 | 0.37 | 0.32 |
| 7 | 12 | 0 | 0 | 0 | 0.31 | 0.41 |
| 8 | 0 | 12 | 0 | 0 | 0.67 | 0.53 |
| 9 | 0 | 0 | 12 | 0 | 0.08 | 0.11 |
| 10 | 0 | 0 | 0 | 12 | 0.48 | 0.4 |
| 11 | 12 | 0 | 0 | 12 | 0.29 | 0.46 |
| 12 | 0 | 12 | 0 | 12 | 0.39 | 0.44 |
| 13 | 6 | 6 | 6 | 6 | 0.34 | 0.063 |
| 14 | 0 | 0 | 12 | 12 | 0.33 | 0.23 |
| 15 | 12 | 12 | 0 | 0 | 0.38 | 0.34 |
| 16 | 12 | 0 | 12 | 0 | 0.27 | 0.39 |
| 17 | 6 | 6 | 6 | 6 | 0.35 | 0.046 |
| 18 | 0 | 12 | 12 | 0 | 0.1 | 0.23 |

(continued)

| Sample No. | PP | G | CF | M | COF Run 1 | COF Run 2 |
|---|---|---|---|---|---|---|
| 19 | 12 | 12 | 12 | 12 | 0.03 | 0.025 |
| 20 | 12 | 12 | 0 | 0 | 0.37 | 0.49 |
| 21 | 12 | 0 | 0 | 12 | 0.34 | 0.38 |
| 22 | 0 | 12 | 0 | 12 | 0.32 | 0.22 |
| 23 | 6 | 6 | 6 | 6 | 0.34 | 0.02 |
| 24 | 12 | 0 | 12 | 0 | 0.14 | 0.15 |
| 25 | 0 | 12 | 12 | 0 | 0.09 | 0.25 |
| 26 | 0 | 0 | 12 | 12 | 0.04 | 0.038 |
| 27 | 6 | 6 | 6 | 6 | 0.35 | 0.026 |
| 28 | 12 | 12 | 12 | 0 | 0.074 | 0.25 |
| 29 | 12 | 0 | 12 | 12 | 0.06 | 0.23 |
| 30 | 0 | 12 | 12 | 12 | 0.06 | 0.058 |
| 31 | 12 | 12 | 0 | 12 | 0.29 | 0.31 |
| 32 | 12 | 12 | 12 | 0 | 0.074 | 0.19 |
| 33 | 12 | 12 | 0 | 12 | 0.31 | 0.31 |
| 34 | 12 | 0 | 12 | 12 | 0.37 | 0.06 |
| 35 | 0 | 12 | 12 | 12 | 0.04 | 0.055 |
| 36 | 12 | 12 | 12 | 12 | 0.03 | 0.042 |
| 37 | 0 | 0 | 0 | 0 | 0.35 | 0.36 |

Using this data, effects of the various components were calculated and are represented in the Pareto Chart of Chart 1. The Pareto Chart in Chart 1 plots the fillers (horizontal axis) and the effect on the coefficient of friction (vertical axis) from the statistically determined data shown in Table 2. The horizontal line, in the chart, indicates the calculated confidence control limit (CCL) of 0.04. The effects above the CCL of 0.04 are considered to be significant. As can be seen the presence of the carbon fiber (CF) as a filler is critical to obtaining low coefficient of friction (e.g. less than or equal to 0.20). Mica (M) and graphite (G) are also considered to be significant as their values from the Pareto Chart are greater than the CCL. Additionally, the combination of PP (particulate polyimide) and the G (graphite) are also determined to be of significance as filler for determining coefficient of friction.

## Chart 1

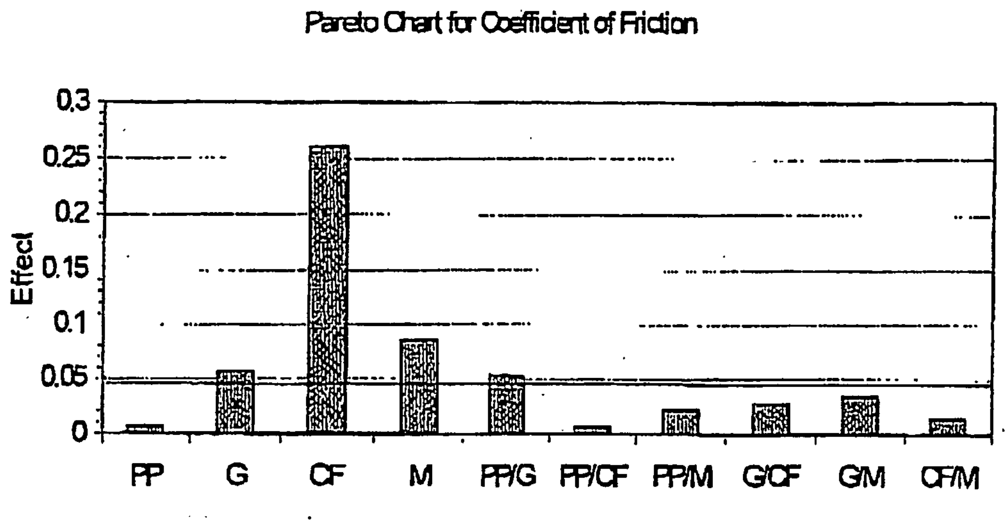


The linear model below represents this relationship and can be used to predict COF for a given level of significant components:

**Predicted COF = 0.274 –0.033(graphite) – 0.128 (carbon fiber) - 0.039 (mica) – 0.024 (polyimide/graphite).**

Each factor in the above equation has a coded value ranging from - 1 to +1 where the levels of each component are represented by integers such that +1 = 12 weight % and -1 = 0 weight %. This equation is used in the present invention to determine statistically the filler levels to achieve desired coefficient of friction.

**Example 3:**

The same method for sample preparation as used in Example 1 was utilized in Example 3. Seventy-five (75) weight percent of a liquid crystalline polyester (DuPont Zenite® 7000) was blended with 10 weight percent of 4767 synthetic graphite, 10 weight percent of Amoco® VMX26 milled carbon fiber, and 5 weight percent of mica (Alsibronz® 10) (Sample 38). Wear testing was done at 1.75 MPa-m/s for this Sample No. 38 and resulted in a wear factor of 30.4 x $10^{-6}$ cc-s/m-kg-hr and a coefficient of friction of 0.115. The value predicted by the equation in Example 2 is 0.098. (Note: The above described model in Example 2 and Table 2 are based on the resin of Example 3. The model would need to be modified for changes to the resin and/or the range of the fillers.)

**Example 4:**

The same method for sample preparation as used in Example 1 was utilized. Sixty-five (65) weight percent of a poletherketone ketone (Cypek® DS-E) was blended with 10 weight percent of 4767 synthetic graphite, 10 weight percent of Amoco® VMX26 milled carbon fiber, 10 weight percent of a particulate polyimide resin (Vespel® SP-1) and 5 weight percent of mica (Alsibronz® 10) (Sample 39). Processing conditions were comparable to that used in Example 1 and was such that the molded part kept its amorphous character. Wear testing was done at 1.4 MPa-m/s for this Sample No. 39 and resulted in a wear factor of 19.2 x $10^{-6}$ cc-s/m-kg-hr and a coefficient of friction of 0.124.

**Example 5:**

Sixty-five (65) weight percent of a liquid crystalline polyester (DuPont Zenite® 9900HT) was blended with 10

weight percent of 4767 synthetic graphite, 10 weight percent of Amoco VMX26 milled carbon fiber, 5 weight percent of mica (Alsibronz® 10) and 10 weight percent of a particulate polyimide resin (Vespel® SP-1). The blending was accomplished using a 30-mm twin screw extruder with barrels set to 390°C for zones 2 to 5, 385°C for zones 6 to 9 and the die at 410°C having a vent port in zone 8. Quenching was accomplished using a water spray. The strand was cut into pellets using a standard rotating blade cutter. The pellets were molded into standard 6.4mm thick ASTM (D638) tensile test bars using a 170g capacity, 145-ton clamping pressure injection molding machine. The profile was as follows: Rear 370°C, Center 400°C, Front 405°C and Nozzle 405°C. The mold was set to 130 °C. The injection conditions were Boost 1 sec, Injection 15 sec, Hold 15 sec, Injection Pressure 3.4 MPa, Ram Speed fast, Screw Speed 120 rpm and Back Pressure minimum.

The samples were made into test specimens by machining. Wear testing was done at PV (pressure x velocity) indicated in Table 3. The resulting COF is also shown in Table 3 to be less than the COF of 0.20. Furthermore, the COF does not change with the PV, as in the prior art of U.S. Patent 5, 789,523 to George et al.

**Table 3**

| Sample No. | PV (MPa-m/s) | Wear Factor (cc-s/m-kg-hr) x $10^{-6}$ | Coefficient of Friction |
|---|---|---|---|
| 40 | 1.75 | 23.6 | 0.14 |
| 40 | 3.5 | 25.2 | 0.13 |

**Example 6:**

The same method for sample preparation as used in Example 1 was utilized in this example. Sixty-five (65) weight percent of a liquid crystalline polyester (DuPont Zenite® 7000) was blended with10 weight percent of 4767 synthetic graphite, 10 weight percent of fiber indicated in the "Fiber Manufacturer" and "Fiber Type" columns of Table 4, 5 weight percent of mica (Alsibronz® 10) and 10 weight percent of a particulate polyimide resin (Vespel® SP-1).

Processing conditions were comparable to that used in Example 1. Wear testing was done at 1.75 MPa-m/s and the COF is reported in Table 4. Based on its high wear factor, Sample No. 44 is considered to be a sample that has failed the wear test and thus it's coefficient of friction is unreliable.

**Table 4**

| Sample No. | Fiber Manufacturer | Fiber Type | Wear Factor (cc-s/m-kg-hr) x $10^{-6}$ | Coefficient of Friction |
|---|---|---|---|---|
| 41 | Amoco | VMX 26 Carbon Fiber | 3.8 | 0.064 |
| 42 | Kureha | Graphitized Fibers M-207S | 10.9 | 0.034 |
| 43 | Kureha | Graphitized Fibers M-2007S | 15.9 | 0.042 |
| 44 | DuPont | Nomex® | 227 | 0.18 |
| 45 | Zoltek | Panex 33, 8.2 mm Chopped Carbon Fiber | 40.3 | 0.18 |

**Example 7:**

The same method for sample preparation as used in Example 1 was utilized. A liquid crystalline polyester

(Zenite® 7000) was blended with various weight percents of a particulate polyimide resin (Vespel® SP-1), graphite (4767 synthetic), Mica (Alsibronz ®10) and Carbon Fiber (Panex 33MF manufactured by Zoltek) as documented in Table 5. Processing conditions were comparable to that used in Example 1. Wear testing was done at 1.75 MPa-m/s and is reported in Table 5.

**Table 5**

| Sample No. | Polyimide (%) | Graphite (%) | Carbon Fiber (%) | Mica (%) | Wear Factor (cc-s/m-kg-hr) x $10^{-6}$ | Coefficient of Friction |
|---|---|---|---|---|---|---|
| 46 | 0 | 10 | 10 | 10 | 20.1 | 0.14 |
| 47 | 10 | 10 | 10 | 5 | 27.4 | 0.17 |
| 48 | 0 | 20 | 10 | 10 | 24.3 | 0.17 |
| 49 | 0 | 10 | 20 | 10 | 57.6 | 0.21 |
| 50 | 0 | 10 | 10 | 20 | 39.2 | 0.17 |
| 51 | 15 | 10 | 10 | 5 | 54.0 | 0.18 |
| 52 | 0 | 10 | 30 | 10 | 42.0 | 0.18 |

**Example 8 :**

The same method for sample preparation as used in Example 1 was utilized in Example 8. Sixty-five (65) weight percent of a liquid crystalline polyester (Zenite® 7000) was blended with 10 weight percent of a particulate polyimide resin (Vespel® SP-1), 10 weight percent of M990 natural graphite manufactured by Asbury Graphite Mills, Inc., 10 weight percent of Panex 33MF milled carbon fiber (manufactured by Zoltek), and 5 weight percent of mica (Alsibronz® 10) (Sample 53). Wear testing was done at 1.75 MPa-m/s and Sample No. 53 resulted in a wear factor of 45.9 x $10^{-6}$ cc-s/m-kg-hr and a coefficient of friction of 0.18.

It is therefore, apparent that there has been provided in accordance with the present invention, a composition containing carbon fiber, mica and graphite and optionally particulate polyimide to provide a low coefficient of friction of less than or equal to 0.20 that fully satisfies the aims and advantages hereinbefore set forth. While this invention has been described in conjunction with a specific embodiment thereof, it is evident that many alternatives, modifications, and variations will be apparent to those skilled in the art. Accordingly, it is intended to embrace all such alternatives, modifications and variations that fall within the spirit and broad scope of the appended claims.

## Claims

1. A composition comprising a thermoplastic material containing fillers wherein said fillers comprise: (A) 1-20% by weight of graphite; (B) 4-30% by weight of a carbon fiber; and (C) 1-20% by weight of mica, and said thermoplastic material comprises 45-92 weight % said composition having a coefficient of friction of less than or equal to 0.20.

2. A composition according to claim 1, further comprising (D) 0-15% by weight of a particulate polyimide.

3. composition according to claim 2, wherein said thermoplastic material comprises preferably 50-86 weight %.

4. A composition according to claim 3, wherein said thermoplastic material comprises most preferably 65-70 weight %.

5. A composition according to claim 1 or 2, wherein said thermoplastic material comprises liquid crystalline polyesters (LCPs), polyimide or polyether ketone ketone (PEKK).

6. A composition according to claim 1 or 2, wherein the carbon fiber is chopped having a length of about 1/3" (8.2mm).

7. A composition according to claim 6, wherein the carbon fiber is preferably milled and has a mean length of at least 150 micrometers.

8. An article made from a composition according to one of claims 1-7.

## Patentansprüche

1. Zusammensetzung umfassend ein Füllstoffe enthaltendes thermoplastisches Material, wobei die Füllstoffe Folgendes umfassen: (A) 1 - 20 Gew.-% Graphit; (B) 4 - 30 Gew.-% Kohlefaser; und (C) 1 - 20 Gew.-% Glimmer; und das thermoplastische Material 45 - 92 Gew.-% der Zusammensetzung umfasst, wobei die Zusammensetzung einen Reibungskoeffizienten von weniger als oder gleich 0,20 aufweist.

2. Zusammensetzung nach Anspruch 1, des weiteren (D) 0 - 15 Gew.-% eines teilchenförmigen Polyimids umfassend.

3. Zusammensetzung nach Anspruch 2, wobei das thermoplastische Material bevorzugt 50 - 86 Gew.-% umfasst.

4. Zusammensetzung nach Anspruch 3, wobei das thermoplastische Material am bevorzugtesten 65 - 70 Gew.-% umfasst.

5. Zusammensetzung nach Anspruch 1 oder 2, wobei das thermoplastische Material flüssige kristalline Polyester (LCP), Polyimid oder Polyetherketonketon (PEKK) umfasst.

6. Zusammensetzung nach Anspruch 1 oder 2, wobei die Kohlefaser zerschnitten ist und eine Länge von etwa 1/3 Zoll (8,2 mm) aufweist.

7. Zusammensetzung nach Anspruch 6, wobei die Kohlefaser bevorzugt gemahlen ist und eine mittlere Länge von mindestens 150 Mikrometern aufweist.

8. Gegenstand, der aus einer Zusammensetzung nach einem der Ansprüche 1 - 7 hergestellt ist.

## Revendications

1. Composition comprenant un matériel thermoplastique qui contient des charges, lesdites charges comprenant: (A) 1-20 % en poids de graphite; (B) 4-30 % en poids de fibre de carbone; et (C) 1-20 % en poids de mica, ladite composition comprenant ledit matériel thermoplastique à 45-92 % en poids et ayant un coefficient de frottement inférieur ou égal à 0,20.

2. Composition selon la revendication 1, comprenant également (D) 0-15 % en poids d'un polyimide particulaire.

3. Composition selon la revendication 2, qui comprend ledit matériel thermoplastique à préférablement 50-86 % en poids.

4. Composition selon la revendication 3, qui comprend ledit matériel thermoplastique à préférablement 65-70 % en poids.

5. Composition selon la revendication 1 ou 2, dans laquelle ledit matériel thermoplastique comprend des polyesters cristallins liquides (LCP), un polyimide ou un polyéther cétone cétone (PEKK).

6. Composition selon la revendication 1 ou 2, dans laquelle la fibre de carbone est découpée à une longueur de 1/3" (8,2 mm) environ.

7. Composition selon la revendication 6, dans laquelle la fibre de carbone est préférablement broyée et a une longueur moyenne d'au moins 150 micromètres.

8. Article produit à partir d'une composition selon l'une des revendications 1-7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5969083 A, Long
- US 5844036 A, Hughes
- US 5830940 A, Nakamura
- US 5789523 A, George
- US 5700863 A, Bloom
- US 4115283 A, Needham
- US 3179614 A